# EUROPEAN PATENT SPECIFICATION

(11) **EP 4 075 147 B1**
(45) Date of publication and mention of the grant of the patent: **15.01.2025**
(21) Application number: 21205921.6
(22) Date of filing: 02.11.2021
(51) Int. Cl.: G01N 35/10, G01N 35/04

(54) **PIPETTE-TIP CONNECTING DEVICE AND METHOD THEREOF**
PIPETTENSPITZENVERBINDUNGSVORRICHTUNG UND VERFAHREN DAFÜR
DISPOSITIF DE CONNEXION DE POINTE DE PIPETTE ET PROCÉDÉ ASSOCIÉ

(43) Date of publication of application: 19.10.2022
(73) Proprietor: Drsignal Biotechnology Co., Ltd, New Taipei City (TW)
(72) Inventor: MI, Hsin Wu, New Taipei City (TW); HUANG, Hsin Fei, New Taipei City (TW)
(74) Representative: Cabinet Chaillot

(56) References cited:
- US-A1- 2018 280 967
- US-A1- 2019 041 302
- US-A1- 2020 319 222

## Description

### 1. Field of the Invention

The present invention relates to an automation equipment for biology and chemistry laboratories, especially to a device that is adapted for connecting a pipette-tip to a pipette.

### 2. Description of the Prior Arts

A pipette is a laboratory tool for precisely drawing up a measured volume of liquid and dispensing the liquid into other containers. The pipette is used in conjunction with at least one pipette-tip. A cylindrical tip connector (male part) is located at bottom of the pipette. Top of the pipette-tip is hollow and cylindrical to form a mount opening (female part). When in use, the mount opening of pipette-tip is tightly located around the tip connector and the pipette-tip is in actual contact with the liquid.

The pipette-tip is disposable and requires frequent replacement to avoid contamination in case the residual liquid in the pipette tip has any chance to contact another sample. To replace the pipette-tip, first use an ejector mechanism of the pipette to eject the pipette-tip from the tip connector, and then align and insert the tip connector into a new pipette-tip via the mount opening.

To ensure that the pipette-tip can be tightly located around the tip connector, an outer diameter of the tip connector is very close to an inner diameter of the mount opening of the pipette-tip, and therefore an axis of the tip connector must be accurately aligned with an axis of the pipette-tip before insertion. When the pipette-tip replacement is manually operated, alignment between the tip connector and the pipette-tip can be achieved correctly through vision and hand feeling. Document US2019041302 discloses a system comprising a pipette tip dispenser transporter capable to move to a loading position to position a pipette tip contained in a pipette tip dispenser to be installed on a pipette tip engaging member of a pipettor, the system further comprising a tool head capable to rotate to position the pipette tip engaging member to install the pipette tip by respective rotation and translation of the tool head to push the pipette tip engaging member into the pipette tip.

However, a standard automation apparatus is only capable of moving the pipette along a fixed path, meaning that there is no feedback correction for aligning the tip connector with the pipette-tip, and therefore it is difficult to automate the process of pipette-tip replacement because the replacement will fail as long as there is a slight deviation of the connection path between the tip connector and the pipette-tip, and in reality it is difficult to prevent such deviation. As a result, currently the replacement of pipette-tip can only be manually operated, which is time-consuming and requires more labor.

The main objective of the present invention is to provide a pipette-tip connecting device and method thereof that allow the replacement process of pipette-tip to be automated.

In order to achieve the above objective, the present invention provides, according to claim 1, a pipette-tip connecting device which comprises a base, a first positioning mechanism, a second positioning mechanism, a connecting seat, a pipette-fixing seat, a tilt actuator, and a linkage mechanism. The first positioning mechanism is mounted on the base and extends along a first direction. The first positioning mechanism has a first slider and a first actuator. The first slider is slidable along the first direction. The first actuator controls a position of the first slider along the first direction. The second positioning mechanism is linked to the first slider and extends upward and downward along a second direction. The second positioning mechanism has a second slider and a second actuator. The second slider is slidable upward and downward along the second direction. The second actuator controls a position of the second slider along the second direction. The connecting seat is mounted on the second slider. The pipette-fixing seat is mounted on the connecting seat and is pivotable relative to the connecting seat around an imaginary pivoting axis. The pipette-fixing seat has a pipette-fixing portion deviated from the imaginary pivoting axis such that the pipette-fixing portion moves along a circular path around the pivoting axis when the pipette-fixing seat pivots. The pivoting axis is nonparallel to the first direction and the second direction such that the circular path of the pipette-fixing portion has components in the first direction and the second direction. The pipette-fixing portion is configured to fix a pipette. At least one tip connector protrudes from a bottom of the pipette. The tilt actuator is mounted on the connecting seat and controls a relative angle between the pipette-fixing seat and the connecting seat. The tilt actuator is electrically connected to the first actuator and the second actuator to make the first actuator move the connecting seat in the first direction and to make the second actuator move the connecting seat in the second direction to compensate a displacement of the tip connector due to tilting of the tilt actuator, thereby rotating the pipette with the at least one tip connector as a center of rotation. The tilt actuator has a main body and a driving rod. The main body is mounted on the connecting seat. The driving rod is linearly movably mounted in the main body and controls the relative angle between the pipette-fixing seat and the connecting seat. The linkage mechanism connects the tilt actuator and the pipette-fixing seat. The linkage mechanism has a connecting block and a connecting bar. The connecting block is fixed to the driving rod of the tilt actuator. The connecting bar has a first end and a second end that are opposite each other. The first end is pivotally connected to the connecting block, and the second end is pivotally connected to the pipette-fixing seat.

When in use, pipette-tips are located under the pipette-fixing seat with mount openings thereof facing upward. Meanwhile, a pipette is fixed to the pipette-fixing seat with the tip connectors directed downward, and the alignment of tip connectors are substantially parallel to the alignment of the pipette-tips at this moment. A corner of the tip connector where a distal end surface and an annular surface thereof are connected forms two right angles when viewed laterally. Then, the tilt actuator tilts the pipette such that centerlines of the tip connectors are tilted relative to centerlines of the pipette-tips to direct one of said two right angles of each of the tip connectors toward the mount opening of a respective one of the pipette-tips. The first actuator locates one of the right angles on top of the mount opening, and then the second actuator moves the pipette downward to insert said right angle into the pipette-tip via the mount opening, wherein the annular surface of the tip connector can abut against a periphery of the mount opening to guide the insertion.

After the right corner of the tip connector is inserted, the tilt actuator gradually realigns the centerlines of the tip connectors to match with the centerlines of the pipette-tips, and meanwhile the first actuator and the second actuator compensate deviation of the tip connectors due to angle adjustment. When the tip connectors are realigned and connect primarily with the pipette-tips, the second actuator presses down the pipette such that the tip connectors are firmly connected to the pipette-tips.

In order to achieve the above objective, the present invention further provides, according to claim 5, a pipette-tip connecting method by employing the pipette-tip connecting device as stated above. The pipette-tip connecting method comprises several steps as follows:
(a) Preparation for tip replacement: Fix the pipette to the pipette-fixing seat. The first actuator controls a position of the pipette-fixing seat along the first direction. The second actuator controls upward and downward movement of the pipette-fixing seat. The tilt actuator controls an angle of the pipette-fixing seat. Prepare at least one pipette-tip which extends upward and downward. Each of the at least one pipette-tip has a mount opening formed on a top thereof.
(b) Tilted insertion: The tilt actuator tilts the pipette such that a centerline of each of the at least one tip connector is tilted relative to a centerline of each of the at least one pipette-tip. The first actuator aligns a distal end of each of the at least one tip connector to the mount opening of a respective one of the at least one pipette-tip, and then the second actuator moves the pipette downward such that the distal end of each of the at least one tip connector is partially inserted into the respective one of the at least one pipette-tip via the mount opening.
(c) Straightened pressing down: The tilt actuator, the first actuator, and the second actuator control the pipette such that the pipette is rotated with the at least one tip connector as center of rotation to align the centerline of each of the at least one tip connector and match with the centerline of the respective one of the at least one pipette-tip, and primarily insert the at least one tip connector into the pipette-tip. Then, the second actuator presses down the pipette such that each of the at least one tip connector is tightly fitted in the respective one of the at least one pipette-tip.

The advantage of the present invention is that the tilt actuator is configured to control tilting of the tip connectors relative to the pipette-tips such that the tip connectors of the pipette can be inserted in a tilted manner to make the correct connection with the pipette-tips more easily; that is, when viewed laterally, the tip connectors can be successfully inserted into the mount opening respectively as long as the corners are located between the widths of the mount openings. There is no need to align the corners and match with the centers of the mount openings precisely, thereby greatly reducing need of positioning accuracy by manual work and making automation of repeating the connection the pipette A with new pipet-tips possible. Production speed and labor need are therefore reduced significantly.

### IN THE DRAWINGS:

Fig. 1 is a perspective view of a pipette-tip connecting device in accordance with the present invention;
Fig. 2 is an exploded perspective view of the pipette-tip connecting device in Fig. 1;
Fig. 3 is a partial exploded perspective view of the pipette-tip connecting device in Fig. 1;
Fig. 4 is a top view of the pipette-tip connecting device in Fig. 1;
Fig. 5 is an enlarged schematic side view of the pipette-tip connecting device in Fig. 1;
Fig. 6 is an enlarged operational side view of the pipette-tip connecting device in Fig. 1, showing a centerline of the pipette being tilted relative to a centerline of the pipette-tip;
Fig. 7 is an enlarged operational side view of the pipette-tip connecting device in Fig. 1, showing the pipette moved downward and the tip connector inserted into the pipette-tip via a mount opening;
Fig. 8 is an enlarged operational side view of the pipette-tip connecting device in Fig. 1, showing the pipette rotated with the tip connectors as center of rotation to realign the tip connectors with the pipette-tips;
Fig. 9 is an enlarged operational side view of the pipette-tip connecting device in Fig. 1, showing the tip connectors aligned with the pipette-tips and fully inserted into the pipette-tips;
Fig. 10 is an enlarged operational side view of the pipette-tip connecting device in Fig. 1, showing the pipette moved upward with the pipette-tips connected to the tip connectors; and
Fig. 11 is a flow chart of a pipette-tip connecting method in accordance with the present invention.

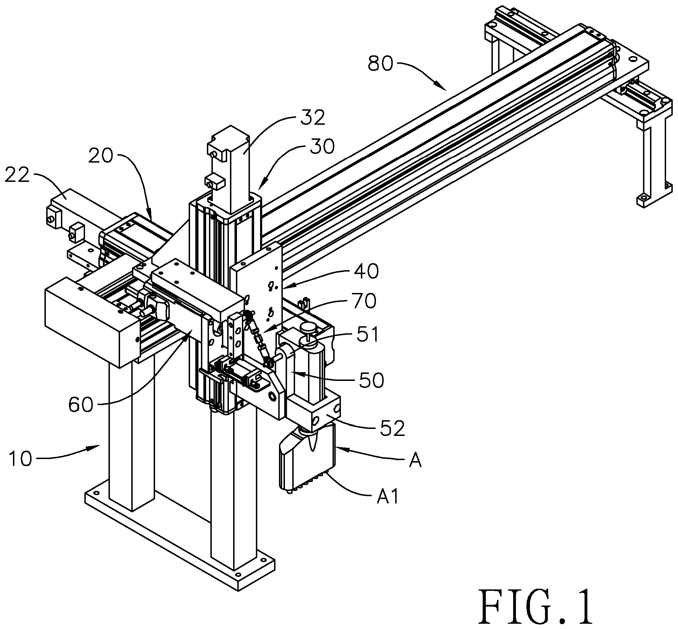

With reference to Fig. 1, a pipette-tip connecting device in accordance with the present invention is configured to connect pipette-tips B to tip connectors A1 in a bottom of a pipette A. The tip connectors A1 are preferably cylindrical. The pipette A may have only one tip connector A1. Multiple unused pipette-tips B are orderly arranged in a box. The pipette-tips B extend upwards and downwards, and each of the pipette-tips B has a mount opening formed on top thereof.

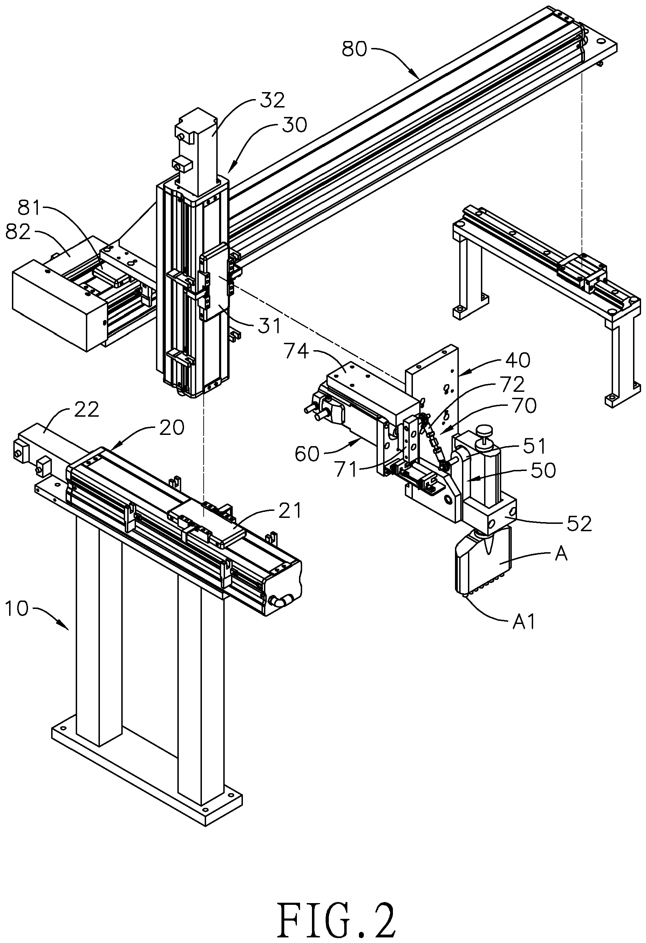

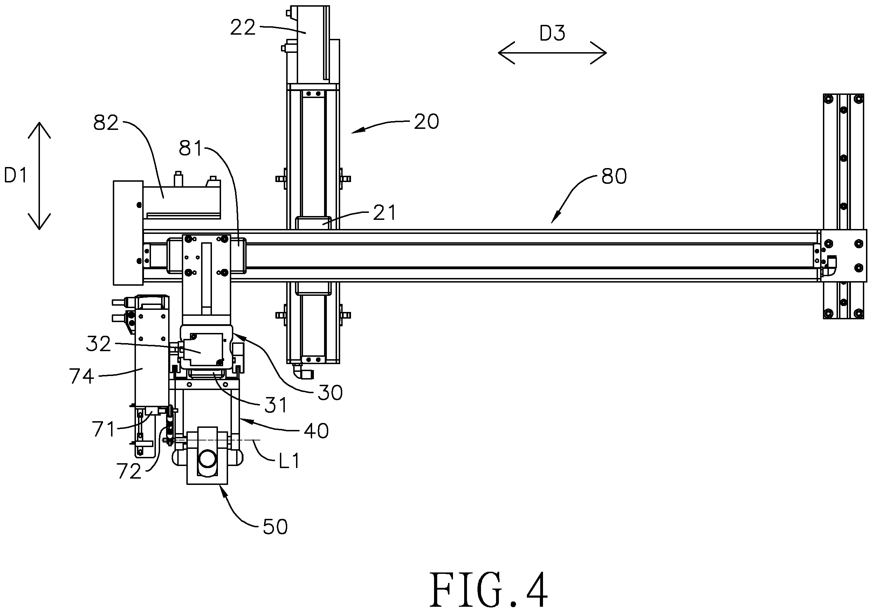

With reference to Figs. 1, 2, and 4, the pipette-tip connecting device has a base 10, a first positioning mechanism 20, a second positioning mechanism 30, a connecting seat 40, a pipette-fixing seat 50, and a tilt actuator 60. In the preferred embodiment, the pipette-tip connecting device further has a linkage mechanism 70 and a third positioning mechanism 80.

The first positioning mechanism 20 is mounted on the base 10 and extends along a first direction D1. The first direction D1 is preferably horizontal. The first positioning mechanism 20 has a first slider 21 and a first actuator 22. The first slider 21 is slidable along the first direction D1. The first actuator 22 controls a position of the first slider 21 along the first direction D1. To be precise, the first positioning mechanism 20 is a horizontally mounted linear module. The first actuator 22 is a motor controlling the first slider 21 via a ball screw of the first positioning mechanism 20.

The second positioning mechanism 30 is linked to the first slider 21 such that the first positioning mechanism 20 controls a position of the second positioning mechanism 30 along the first direction D1. In the preferred embodiment, the third positioning mechanism 80 is mounted between the first slider 21 of the first positioning mechanism 20 and the second positioning mechanism 30; that is, the second positioning mechanism 30 is linked to the first slider 21 via the third positioning mechanism 80.

The third positioning mechanism 80 extends along a third direction D3 and has a third slider 81 and a third actuator 82. The third slider 81 is movable along the third direction D3 such that the second positioning mechanism 30 can be aligned with other experiment equipment. In another preferred embodiment, the second positioning mechanism 30 is omitted, and the second positioning mechanism 30 is directly mounted on the first slider 21.

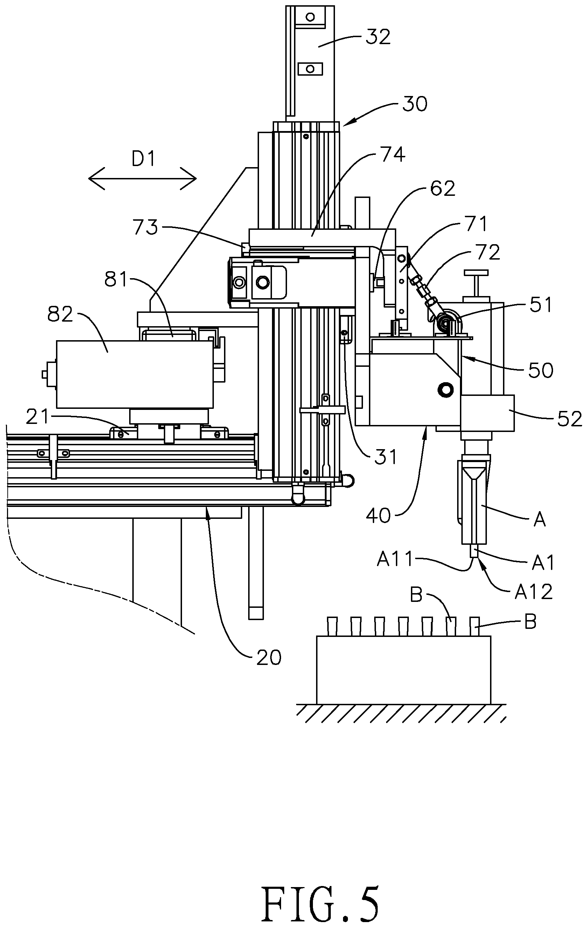

With reference to Fig. 5, the second positioning mechanism 30 extends upward and downward along a second direction D2. The second direction D2 is preferably vertical, but can be slightly tilted relative to the vertical line. The second positioning mechanism 30 has a second slider 31 and a second actuator 32. The second slider 31 is slidable upward and downward along the second direction D2. The second actuator 32 controls the position of the second slider 31 along the second direction D2. The second actuator 32 is preferably a linear module.

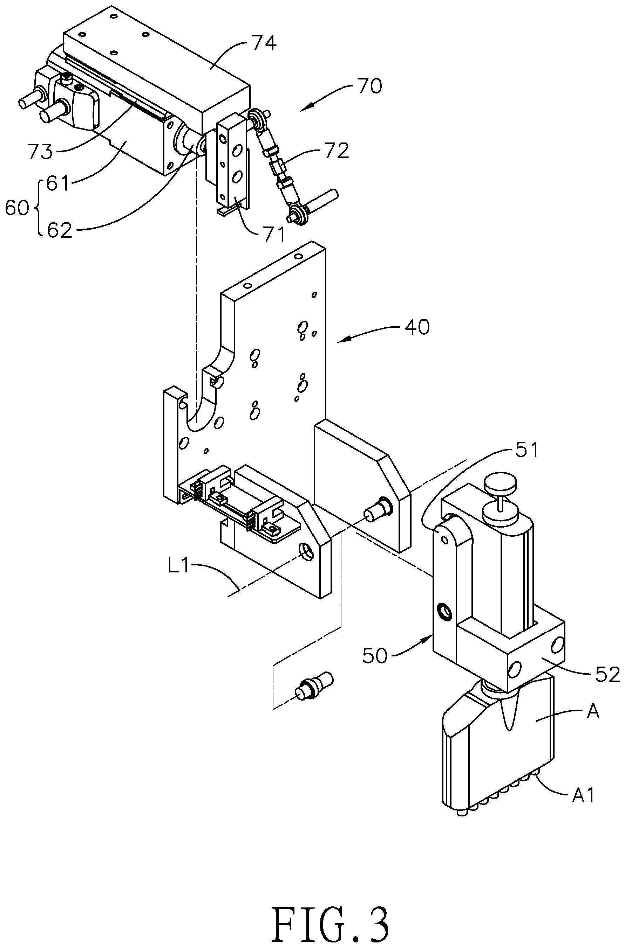

With reference to Figs. 3, 5, and 6, the connecting seat 40 is mounted on the second slider 31 such that the first positioning mechanism 20 and the second positioning mechanism 30 control a position of the connecting seat 40 along the first direction D1 and the second direction D2.

The pipette-fixing seat 50 is mounted on the connecting seat 40 and is pivotal relative to the connecting seat 40 around an imaginary pivoting axis L1. The pipette-fixing seat 50 has a pipette-driving end 51 and a pipette-fixing portion 52. The pipette-fixing portion 52 is configured to fix the pipette A. The pipette-fixing portion 52 moves in the first direction D1 and the second direction D2 when the pipette-fixing seat 50 pivots relative to the connecting seat 40. In other words, when the pipette-fixing seat 50 pivots, the pipette-fixing portion 52 moves along a circular path around the pivoting axis L1 such that movement of the pipette-fixing portion 52 has component in the first direction D1 and the second direction D2.

The pivoting axis L1 is nonparallel to the first direction D1 and the second direction D2, and to be precise, the pivoting axis L1 is perpendicular to the first direction D1 and second direction D2. The pipette-driving end 51 is located above the pivoting axis L1.

The tilt actuator 60 is mounted on the connecting seat 40 and controls a relative angle between the pipette-fixing seat 50 and the connecting seat 40. In the preferred embodiment, the tilt actuator 60 is a linear actuator and has a main body 61 and a driving rod 62. The main body 61 is mounted on the connecting seat 40. The driving rod 62 is linearly movably mounted in the main body 61. Linear movement of the driving rod 62 controls the relative angle between the pipette-fixing seat 50 and the connecting seat 40.

The tilt actuator 60 is electrically connected to the first actuator 22 and the second actuator 32 such that when the pipette-fixing seat 50 is being tilted by the tilt actuator 60, the position of the connecting seat 40 in the first direction D1 and the second direction D2 is dynamically compensated by the first actuator 22 and the second actuator 32 to substantially maintain the tip connector A1 of the pipette A in a fixed position.

The linkage mechanism 70 connects the tilt actuator 60 and the pipette-fixing seat 50 to transform linear motion of the driving rod 62 into rotary motion of the pipette-fixing seat 50. The linkage mechanism 70 has a connecting block 71, a connecting bar 72, a guiding seat 73 and a guiding slider 74.

The connecting block 71 is fixed to the driving rod 62 of the tilt actuator 60. Two opposite ends of the connecting bar 72 are a first end and a second end respectively. The first end is pivotally connected to the connecting block 71, and the second end is pivotally connected to the pipette-driving end 51 of the pipette-fixing seat 50. A relative angle between the connecting bar 72 and the driving rod 62 is preferably from 40 to 60 degrees to ensure that the linear motion of the driving rod 62 can be stably and precisely transformed into the rotary motion of the pipette-fixing seat 50.

The guiding seat 73 is fixed on the main body 61 of the tilt actuator 60. The guiding slider 74 is mounted on the guiding seat 73 and is capable of moving in parallel direction with the driving rod 62. The guiding slider 74 is disposed along with the driving rod 62 of the tilt actuator 60. The guiding slider 74 is fixed to the connecting block 71 such that when the connecting block 71 is moved by the force of the driving rod 62 and the guiding slider 74 to reduce the angle between the connecting block 71 and the connecting bar 72.

The tilt actuator 60 is not limited to be connected to the pipette-fixing seat 50 via the linkage mechanism 70. In another preferred embodiment, the tilt actuator 60 has an output end that controls rotary motion, and said output end is directly connected to the pipette-fixing seat 50 to change the angle between the pipette-fixing seat 50 and the connecting seat 40, and then is able to control the tilting angle of pipette A

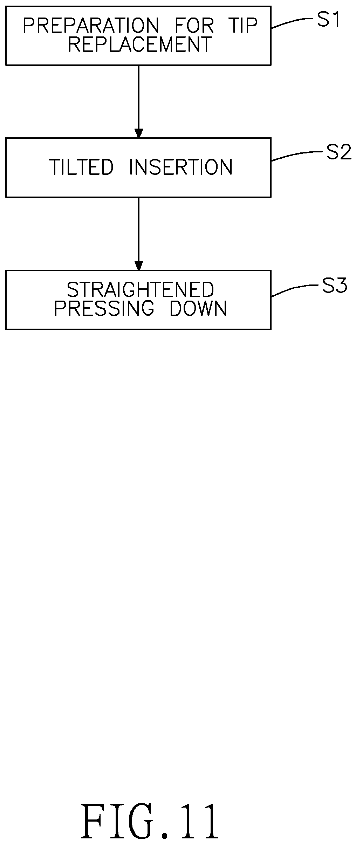

With reference to Fig. 11, a pipette-tip connecting method in accordance to the present invention comprises the following steps: the first step (S1) is preparation for tip replacement; the second step (S2) is tilted insertion; the third step (S3) is straightened pressing down. The pipette-tip connecting method is performed by, but not limited to, the aforementioned pipette-tip connecting device.

The first step (S1) is preparation for tip replacement. With reference to Fig. 5, fix the pipette A to the pipette-fixing seat 50. The cylindrical tip connectors A1 of the pipette A are protruded from a bottom of the pipette A as aforementioned. The first actuator 22 controls the position of the pipette-fixing seat 50 along the first direction D1. The second actuator 32 controls upward and downward movement of the pipette-fixing seat 50; that is, the second actuator 32 controls the movement of the pipette-fixing seat 50 along the second direction D2. The tilt actuator 60 controls the angle of the pipette-fixing seat 50. Prepare the pipette-tips B for replacement. The pipette-tips B extend upward and downward. Each one of the pipette-tips B has the mount opening formed on the top thereof.

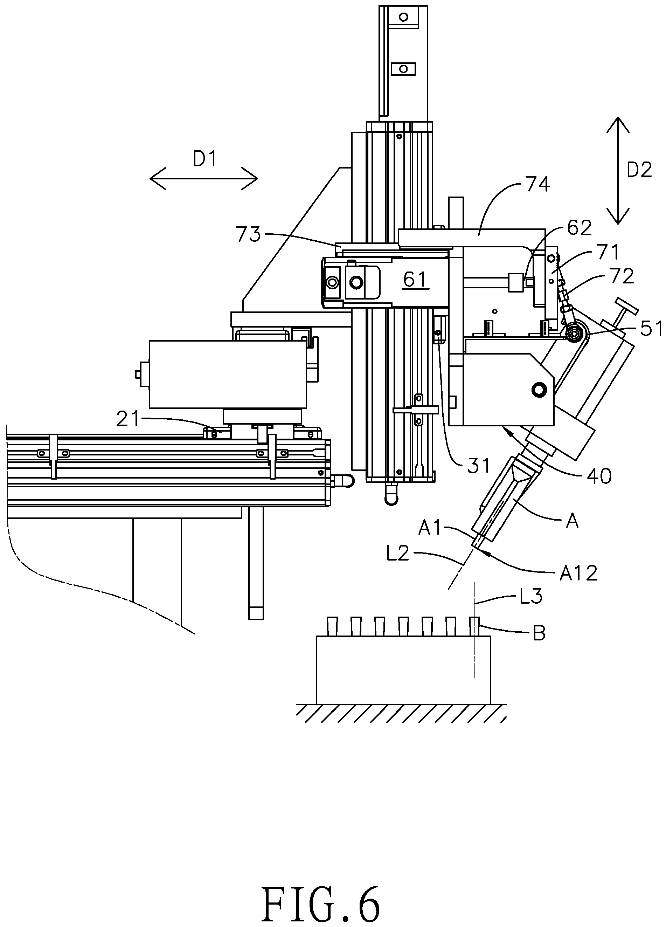

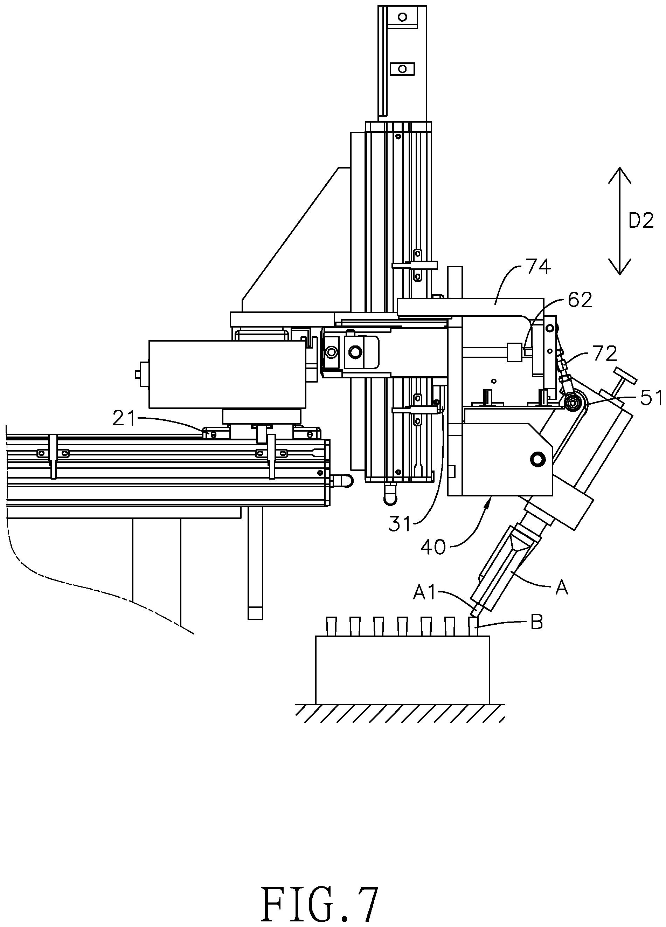

The second step (S2) is tilted insertion. With reference to Fig. 6 and Fig. 7, the tilt actuator 60 tilts the pipette A such that the centerlines L2 of the tip connectors A1 are tilted relative to the centerlines L3 of the pipette-tips B as shown in Fig. 6. The first actuator 22 aligns distal ends of the tip connectors A1 to the mount openings of the pipette-tips B. To be precise, the first actuator 22 aligns a corner A12 of each one of the tip connectors A1 above the mount opening of a corresponding one of the pipette-tips B, wherein said corner A12 is the portion of a distal end surface A11 and the pipette-tips B are connected primarily. When viewed laterally as shown in Fig. 5, the corner A12 forms two right angles.

Then, the second actuator 32 moves the pipette A downward such that the corners A12 of the tip connectors A1 are able to insert into the pipette-tips via the mount opening and then the second actuator moves continually the pipette downward such that the distal end of the at least one pipette-tip is partially inserted into the pipette-tips B via the mount openings.

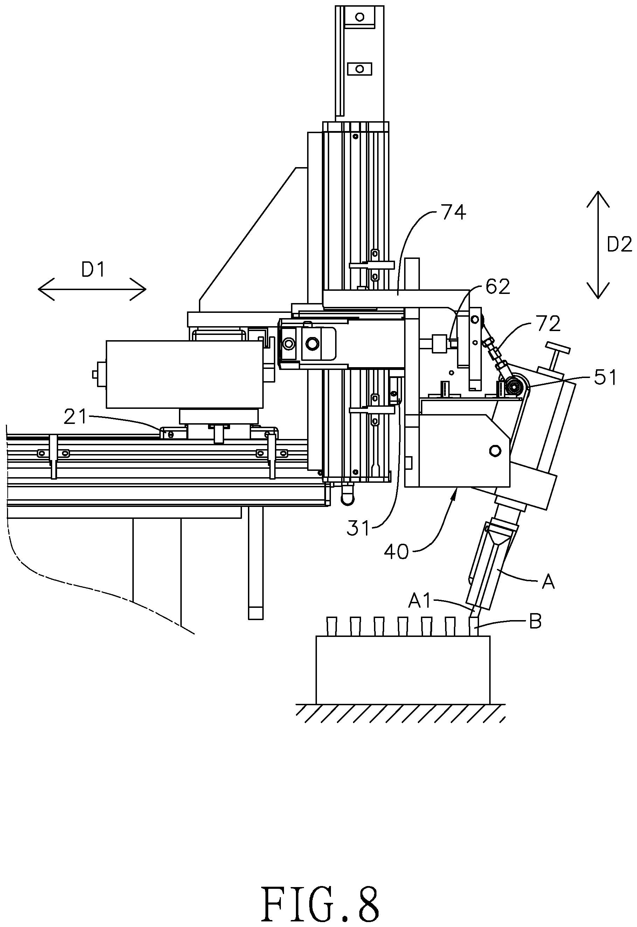

The third step (S3) is straightened pressing down. With reference to Figs. 7 to 9, the tilt actuator 60, the first actuator 22, and the second actuator 32 control the pipette A such that the pipette A is rotated with the tip connectors A1 as center of rotation to align the centerlines L2 of each of the tip connectors A1 and match with the centerline L3 of the respective one of the pipette-tips B and to fully insert the distal end surfaces A11 of the tip connectors A1 into the pipette-tips B respectively. Finally, the second actuator 32 presses down the pipette A such that each of the tip connectors A1 is tightly fitted in the respective one of the pipette-tips B and abuts against an inner annular surface of a respective one of the pipette-tips B to connect the pipette-tips B to the tip connectors A1 correctly and securely.

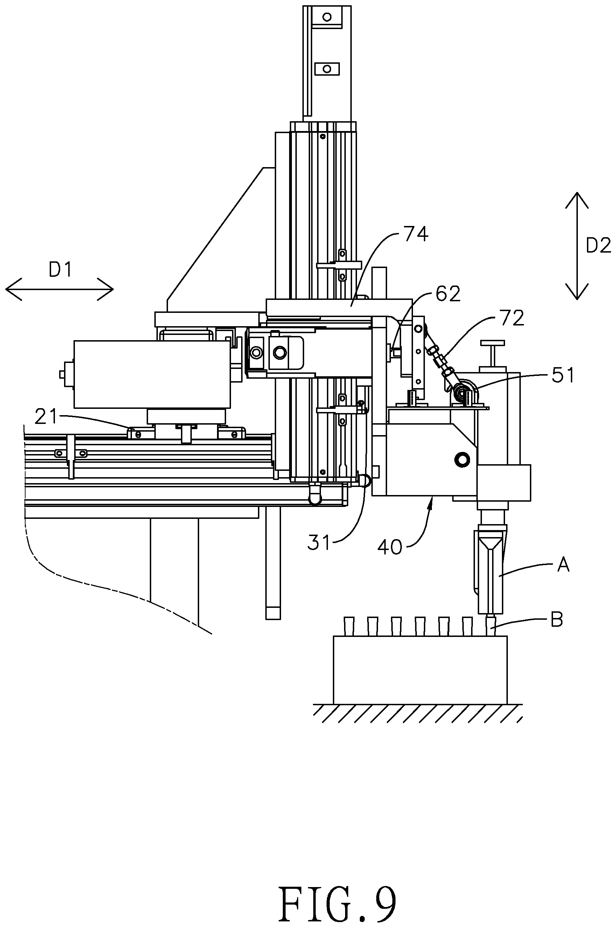

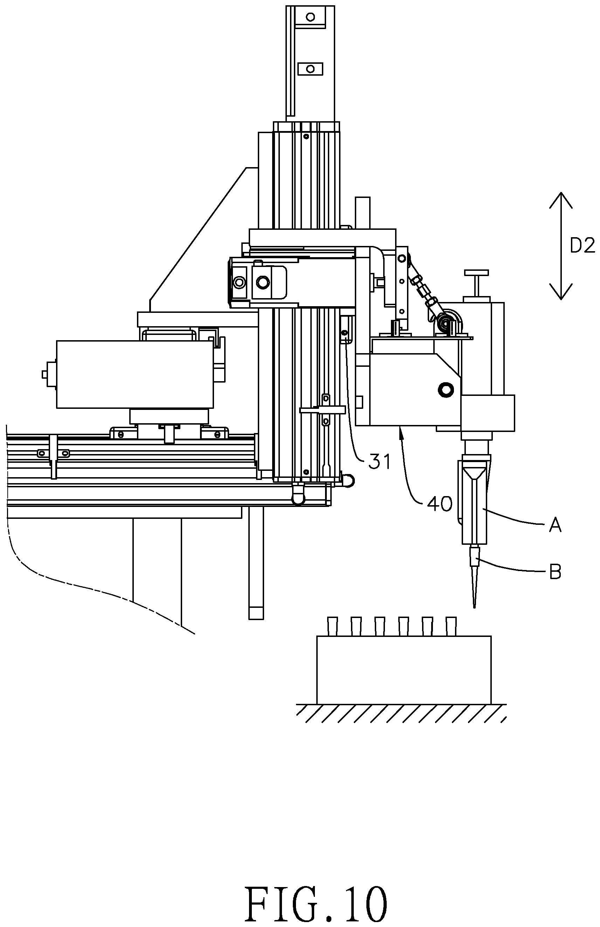

With reference to Fig. 9 and Fig. 10, after connecting the pipette-tips B to the tip connectors A1, the second actuator 32 moves the pipette A upward, and then the pipette A is moved elsewhere to draw and dispense liquid.

To sum up, the tilt actuator 60 enables the tip connectors A1 of the pipette A to be inserted into the mount openings of the pipette-tips B in an inclined manner. Therefore, the tip connectors A1 can be inserted into the mount openings as long as the corners A12 are above the mount openings. That is, when viewed laterally as shown in Figs. 5 to 7, the tip connectors A1 can be successfully inserted into the mount openings as long as each one of the corners A12 is located between the widths of a respective one of the mount openings. There is no need to align the corners A12 with the centers of the mount openings with precision, thereby greatly reducing need of positioning accuracy and making automation process of repeating the connection the pipette A with new pipet-tips B possible. Production speed and labor need are therefore reduced significantly.

## Claims

1. A pipette-tip (B) connecting device, configured to connect a pipette-tip (B) to a tip connector ( A1) protruding from the bottom of a pipette (A), wherein the pipette-tip (B) connecting device comprises:
a base (10);
a first positioning mechanism (20) mounted on the base (10) and extending along a first direction (D1); the first positioning mechanism (20) having:
a first slider (21) being slidable along the first direction (D1);
a first actuator (22) controlling a position of the first slider (21) along the first direction (D1);
a second positioning mechanism (30) linked to the first slider (21) and extending upward and downward along a second direction (D2); the second positioning mechanism (30) having:
a second slider (31) being slidable upward and downward along the second direction (D2);
a second actuator (32) controlling a position of the second slider (31) along the second direction (D2);
a connecting seat (40) mounted on the second slider (31);
a pipette-fixing seat (50) mounted on the connecting seat (40) and being pivotable relative to the connecting seat (40) around an imaginary pivoting axis (L1); the pipette-fixing seat (50) having:
a pipette-fixing portion (52) deviated from the imaginary pivoting axis (L1) such that the pipette-fixing portion (52) moves along a circular path around the pivoting axis (L1) when the pipette-fixing seat (50) pivots; the pivoting axis (L1) being nonparallel to the first direction D1 and the second direction D2 such that the circular path of the pipette-fixing portion (52) has components in the first direction (D1) and the second direction (D2); the pipette-fixing portion (52) configured to fix a pipette (A); and
a tilt actuator (60) mounted on the connecting seat (40) and controlling a relative angle between the pipette-fixing seat (50) and the connecting seat (40); the tilt actuator (60) electrically connected to the first actuator (22) and the second actuator (32) to make the first actuator (22) move the connecting seat (40) in the first direction (D1) and to make the second actuator (32) move the connecting seat (40) in the second direction (D2) to compensate a displacement of the tip connector (A1) of the pipette (A) due to the tilting of the tilt actuator (60), thereby rotating the pipette (A) with the at least one tip connector (A1) as a center of rotation; the tilt actuator (60) having
a main body (61) mounted on the connecting seat (40); and
a driving rod (62) linearly movably mounted in the main body (61) and controlling the relative angle between the pipette-fixing seat (50) and the connecting seat (40);
a linkage mechanism (70) connecting the tilt actuator (60) and the pipette-fixing seat (50); the linkage mechanism (70) having
a connecting block (71) fixed to the driving rod (62) of the tilt actuator (60); and
a connecting bar (72) having
a first end pivotally connected to the connecting block (71); and
a second end being opposite to the first end and pivotally connected to the pipette-fixing seat (50).

2. The pipette-tip (B) connecting device as claimed in claim 1, wherein
the linkage mechanism (70) has:
a guiding seat (73) fixed on the main body (61) of the tilt actuator (60);
a guiding slider (74) mounted on the guiding seat (73) and capable of moving in a parallel direction with the driving rod (62); the guiding slider (74) disposed along with the driving rod (62) of the tilt actuator (60); the guiding slider (74) fixed to the connecting block (71).

3. The pipette-tip (B) connecting device as claimed in claim 1, wherein
the pipette-fixing seat (50) has a pipette-driving end (51) located above the pivoting axis (L1);
the second end of the connecting bar (72) is pivotally connected to the pipette-driving end (51) of the pipette-fixing seat (50);
the relative angle between the connecting bar (72) and the driving rod (62) is from 40 degrees to 60 degrees.

4. The pipette-tip (B) connecting device as claimed in any one of claims 1 to 3 further comprises:
a third positioning mechanism (80) mounted on the first slider (21) of the first positioning mechanism (20) and extending along a third direction (D3); the third positioning mechanism (80) having:
a third slider (81) being movable along the third direction (D3), wherein the second positioning mechanism (30) is mounted on the third slider (81);
a third actuator (82) controlling a position of the third slider (81) along the third direction (D3).

5. A pipette-tip (B) connecting method by employing the pipette-tip (B) connecting device of claim 1, **characterized in that** the pipette-tip (B) connecting method comprises steps as follows:
(a) preparation for tip replacement: fixing the pipette (A) to the pipette-fixing seat (50); the first actuator (22) controlling a position of the pipette-fixing seat (50) along the first direction (D1); the second actuator (32) controlling upward and downward movement of the pipette-fixing seat (50); the tilt actuator (60) controlling an angle of the pipette-fixing seat (50); preparing at least one pipette-tip (B); the at least one pipette-tip (B) extending upward and downward; each of the at least one pipette-tip (B) having a mount opening formed on a top thereof;
(b) tilted insertion: the tilt actuator (60) tilting the pipette (A) such that a centerline (L2) of each of the at least one tip connector (A1) is tilted relative to a centerline (L3) of each of the at least one pipette-tip (B); the first actuator (22) aligning a distal end of each of the at least one tip connector (A1) to the mount opening of a respective one of the at least one pipette-tip (B), and then the second actuator (32) moving the pipette (A) downward such that the distal end of each of the at least one tip connector (A1) is partially inserted into the respective one of the at least one pipette-tip (B) via the mount opening;
(c) straightened pressing down: the tilt actuator (60), the first actuator (22), and the second actuator (32) controlling the pipette (A) such that the pipette (A) is rotated with the at least one tip connector (A1) as center of rotation to align the centerline (L2) of each of the at least one tip connector (A1) with the centerline (L3) of the respective one of the at least one pipette-tip (B) and to fully insert the distal end of the at least one tip connector (A1) into the pipette-tip (B); then, the second actuator (32) pressing down the pipette (A) such that each of the at least one tip connector (A1) is tightly fitted in the respective one of the at least one pipette-tip (B).

## Patentansprüche

1. - Verbindungsvorrichtung für Pipettenspitze (B), die konfiguriert ist, um eine Pipettenspitze (B) mit einem Spitzenverbinder (A1) zu verbinden, der aus dem Boden einer Pipette (A) hervorsteht, wobei die Verbindungsvorrichtung für Pipettenspitze (B) Folgendes umfasst:
eine Basis (10);
einen ersten Positionierungsmechanismus (20), der an der Basis (10) montiert ist und sich entlang einer ersten Richtung (D1) erstreckt; wobei der erste Positionierungsmechanismus (20) Folgendes aufweist:
einen ersten Schieber (21), der entlang der ersten Richtung (D1) verschiebbar ist;
einen ersten Aktuator (22), der eine Position des ersten Schiebers (21) entlang der ersten Richtung (D1) steuert;
einen zweiten Positionierungsmechanismus (30), der mit dem ersten Schieber (21) verbunden ist und sich entlang einer zweiten Richtung (D2) nach oben und nach unten erstreckt; wobei der zweite Positionierungsmechanismus (30) Folgendes aufweist:
einen zweiten Schieber (31), der entlang der zweiten Richtung (D2) nach oben und nach unten verschiebbar ist;
einen zweiten Aktuator (32), der eine Position des zweiten Schiebers (31) entlang der zweiten Richtung (D2) steuert;
einen Verbindungssitz (40), der an dem zweiten Schieber (31) montiert ist;
einen Pipettenbefestigungssitz (50), der an dem Verbindungssitz (40) montiert und in Bezug auf den Verbindungssitz (40) um eine imaginäre Schwenkachse (L1) schwenkbar ist; wobei der Pipettenbefestigungssitz (50) Folgendes aufweist:
einen Pipettenbefestigungsabschnitt (52), der von der imaginären Schwenkachse (L1) abweicht, sodass sich der Pipettenbefestigungsabschnitt (52) beim Schwenken des Pipettenbefestigungssitzes (50) entlang einer Kreisbahn um die Schwenkachse (L1) bewegt; wobei die Schwenkachse (L1) nicht parallel zu der ersten Richtung D1 und der zweiten Richtung D2 ist, sodass die Kreisbahn des Pipettenbefestigungsabschnitts (52) Komponenten in der ersten Richtung (D1) und der zweiten Richtung (D2) aufweist; wobei der Pipettenbefestigungsabschnitt (52) konfiguriert ist, um eine Pipette (A) zu befestigen; und
einen Neigungsaktuator (60), der an dem Verbindungssitz (40) montiert ist und einen relativen Winkel zwischen dem Pipettenbefestigungssitz (50) und dem Verbindungssitz (40) steuert; wobei der Neigungsaktuator (60) elektrisch mit dem ersten Aktuator (22) und dem zweiten Aktuator (32) verbunden ist, um den ersten Aktuator (22) zu veranlassen, den Verbindungssitz (40) in der ersten Richtung (D1) zu bewegen, und um den zweiten Aktuator (32) zu veranlassen, den Verbindungssitz (40) in der zweiten Richtung (D2) zu bewegen, um eine Verschiebung des Spitzenverbinders (A1) der Pipette (A) aufgrund des Neigens des Neigungsaktuator (60) zu kompensieren, wodurch die Pipette (A) mit dem mindestens einen Spitzenverbinder (A1) als Drehmitte gedreht wird; wobei der Neigungsaktuator (60) Folgendes aufweist
einen Hauptkörper (61), der an dem Verbindungssitz (40) montiert ist; und
eine Antriebsstange (62), die linear bewegbar in dem Hauptkörper (61) montiert ist und den relativen Winkel zwischen dem Pipettenbefestigungssitz (50) und dem Verbindungssitz (40) steuert;
einen Verbindungsmechanismus (70), der den Neigungsaktuator (60) und den Pipettenbefestigungssitz (50) verbindet; wobei der Verbindungsmechanismus (70) Folgendes aufweist
einen Verbindungsblock (71), der an der Antriebsstange (62) des Neigungsaktuators (60) befestigt ist, und
eine Verbindungsstange (72), die Folgendes aufweist
ein erstes Ende, das schwenkbar mit dem Verbindungsblock (71) verbunden ist; und
ein zweites Ende gegenüber dem ersten Ende und das schwenkbar mit dem Pipettenbefestigungssitz (50) verbunden ist.

2. - Verbindungsvorrichtung für Pipettenspitzen (B) nach Anspruch 1, wobei
der Gestängemechanismus (70) Folgendes aufweist:
einen Führungssitz (73), der an dem Hauptkörper (61) des Neigungsaktuators (60) befestigt ist;
einen Führungsschieber (74), der an dem Führungssitz (73) montiert ist und in der Lage ist, sich in einer parallelen Richtung mit der Antriebsstange (62) zu bewegen; wobei der Führungsschieber (74) zusammen mit der Antriebsstange (62) des Neigungsaktuators (60) angeordnet ist; wobei der Führungsschieber (74) an dem Verbindungsblock (71) befestigt ist.

3. - Verbindungsvorrichtung für Pipettenspitzen (B) nach Anspruch 1, wobei
der Pipettenbefestigungssitz (50) ein Pipettenantriebsende (51) aufweist, das sich oberhalb der Schwenkachse (L1) befindet;
das zweite Ende der Verbindungsstange (72) schwenkbar mit dem Pipettenantriebsende (51) des Pipettenbefestigungssitzes (50) verbunden ist;
der relative Winkel zwischen der Verbindungsstange (72) und der Antriebsstange (62) von 40 bis 60 Grad ist.

4. - Verbindungsvorrichtung für Pipettenspitzen (B) nach einem der Ansprüche 1 bis 3, die ferner Folgendes umfasst:
einen dritten Positionierungsmechanismus (80), der an dem ersten Schieber (21) des ersten Positionierungsmechanismus (20) montiert ist und sich entlang einer dritten Richtung (D3) erstreckt; wobei der dritte Positionierungsmechanismus (80) Folgendes aufweist:
einen dritten Schieber (81), der entlang der dritten Richtung (D3) bewegbar ist, wobei der zweite Positionierungsmechanismus (30) an dem dritten Schieber (81) montiert ist;
einen dritten Aktuator (82), der eine Position des dritten Schiebers (81) entlang der dritten Richtung (D3) steuert.

5. - Verbindungsverfahren für Pipettenspitzen (B) unter Verwendung der Verbindungsvorrichtung für Pipettenspitzen (B) nach Anspruch 1, **dadurch gekennzeichnet, dass** das Verbindungsverfahren für Pipettenspitzen (B) die folgenden Schritte umfasst:
(a) Vorbereitung für den Spitzenersatz: Befestigen der Pipette (A) an dem Pipettenbefestigungssitz (50); wobei der erste Aktuator (22) eine Position des Pipettenbefestigungssitzes (50) entlang der ersten Richtung (D1) steuert; der zweite Aktuator (32) eine Aufwärts- und Abwärtsbewegung des Pipettenbefestigungssitzes (50) steuert; der Neigungsaktuator (60) einen Winkel des Pipettenbefestigungssitzes (50) steuert; Vorbereiten mindestens einer Pipettenspitze (B); wobei sich die mindestens eine Pipettenspitze (B) nach oben und nach unten erstreckt; jede der mindestens einen Pipettenspitze (B) eine Montageöffnung aufweist, die an einer Oberseite davon gebildet ist;
(b) geneigte Einführung: der Neigungsaktuator (60) neigt die Pipette (A) sodass eine Mittellinie (L2) von jedem des mindestens einen Spitzenverbinders (A1) in Bezug auf eine Mittellinie (L3) von jeder der mindestens einen Pipettenspitze (B) geneigt wird; wobei der erste Aktuator (22) ein distales Ende von jedem des mindestens einen Spitzenverbinders (A1) auf die Befestigungsöffnung einer jeweiligen der mindestens einen Pipettenspitze (B) ausrichtet, und dann der zweite Aktuator (32) die Pipette (A) nach unten bewegt, sodass das distale Ende von jedem des mindestens einen Spitzenverbinders (A1) über die Befestigungsöffnung teilweise in die jeweilige der mindestens einen Pipettenspitze (B) eingeführt wird;
(c) gerades Abwärtsdrücken: der Neigungsaktuator (60), der erste Aktuator (22) und der zweite Aktuator (32) steuern die Pipette (A), sodass die Pipette (A) mit dem mindestens einen Spitzenverbinder (A1) als Drehpunkt gedreht wird, um die Mittellinie (L2) von jedem des mindestens einen Spitzenverbinders (A1) mit der Mittellinie (L3) der jeweiligen der mindestens einen Pipettenspitze (B) auszurichten und das distale Ende des mindestens einen Spitzenverbinders (A1) vollständig in die Pipettenspitze (B) einzuführen; dann drückt der zweite Aktuator (32) die Pipette (A) nach unten, sodass jeder des mindestens einen Spitzenverbinder (A1) fest in die jeweilige der mindestens einen Pipettenspitze (B) eingepasst ist.

## Revendications

1. - Dispositif de connexion de pointe de pipette (B), configuré pour connecter une pointe de pipette (B) à un connecteur de pointe (A1) faisant saillie à partir de la partie inférieure d'une pipette (A), le dispositif de connexion de pointe de pipette (B) comprenant :
une base (10) ;
un premier mécanisme de positionnement (20) monté sur la base (10) et s'étendant selon une première direction (D1) ; le premier mécanisme de positionnement (20) ayant :
un premier coulisseau (21) apte à coulisser selon la première direction (D1) ;
un premier actionneur (22) commandant une position du premier coulisseau (21) selon la première direction (D1) ;
un deuxième mécanisme de positionnement (30) lié au premier coulisseau (21) et s'étendant vers le haut et vers le bas selon une deuxième direction (D2) ; le deuxième mécanisme de positionnement (30) ayant :
un deuxième coulisseau (31) apte à coulisser vers le haut et vers le bas selon la deuxième direction (D2) ;
un deuxième actionneur (32) commandant une position du deuxième coulisseau (31) selon la deuxième direction (D2) ;
un siège de connexion (40) monté sur le deuxième coulisseau (31) ;
un siège de fixation de pipette (50) monté sur le siège de connexion (40) et apte à pivoter par rapport au siège de connexion (40) autour d'un axe de pivotement imaginaire (L1) ; le siège de fixation de pipette (50) ayant :
une partie de fixation de pipette (52) s'écartant de l'axe de pivotement imaginaire (L1) de telle sorte que la partie de fixation de pipette (52) se déplace le long d'une trajectoire circulaire autour de l'axe de pivotement (L1) lorsque le siège de fixation de pipette (50) pivote ; l'axe de pivotement (L1) n'étant pas parallèle à la première direction D1 et à la deuxième direction D2, de telle sorte que la trajectoire circulaire de la partie de fixation de pipette (52) a des composantes dans la première direction (D1) et la deuxième direction (D2) ; la partie de fixation de pipette (52) étant configurée pour fixer une pipette (A) ; et
un actionneur d'inclinaison (60) monté sur le siège de connexion (40) et commandant un angle relatif entre le siège de fixation de pipette (50) et le siège de connexion (40) ; l'actionneur d'inclinaison (60) étant connecté électriquement au premier actionneur (22) et au deuxième actionneur (32) pour amener le premier actionneur (22) à déplacer le siège de connexion (40) dans la première direction (D1) et amener le deuxième actionneur (32) à déplacer le siège de connexion (40) dans la deuxième direction (D2) afin de compenser un déplacement du connecteur de pointe (A1) de la pipette (A) en raison de l'inclinaison de l'actionneur d'inclinaison (60), faisant ainsi tourner la pipette (A) avec l'au moins un connecteur de pointe (A1) comme centre de rotation ; l'actionneur d'inclinaison (60) ayant
un corps principal (61) monté sur le siège de connexion (40) ; et
une tige d'entraînement (62) montée de manière linéairement mobile dans le corps principal (61) et commandant l'angle relatif entre le siège de fixation de pipette (50) et le siège de connexion (40) ;
un mécanisme de liaison (70) connectant l'actionneur d'inclinaison (60) et le siège de fixation de pipette (50) ; le mécanisme de liaison (70) ayant
un bloc de connexion (71) fixé à la tige d'entraînement (62) de l'actionneur d'inclinaison (60) ; et
une barre de connexion (72) ayant
une première extrémité connectée de manière pivotante au bloc de connexion (71) ; et
une seconde extrémité opposée à la première extrémité et connectée de manière pivotante au siège de fixation de pipette (50).

2. - Dispositif de connexion de pointe de pipette (B) selon la revendication 1, dans lequel
le mécanisme de liaison (70) a :
un siège de guidage (73) fixé sur le corps principal (61) de l'actionneur d'inclinaison (60) ;
un coulisseau de guidage (74) monté sur le siège de guidage (73) et apte à se déplacer dans une direction parallèle à la tige d'entraînement (62) ; le coulisseau de guidage (74) étant disposé conjointement avec la tige d'entraînement (62) de l'actionneur d'inclinaison (60) ; le coulisseau de guidage (74) étant fixé au bloc de connexion (71) .

3. - Dispositif de connexion de pointe de pipette (B) selon la revendication 1, dans lequel
le siège de fixation de pipette (50) a une extrémité d'entraînement de pipette (51) située au-dessus de l'axe de pivotement (L1) ;
la seconde extrémité de la barre de connexion (72) est connectée de manière pivotante à l'extrémité d'entraînement de pipette (51) du siège de fixation de pipette (50) ;
l'angle relatif entre la barre de connexion (72) et la tige d'entraînement (62) se situe entre 40 degrés et 60 degrés.

4. - Dispositif de connexion de pointe de pipette (B) selon l'une quelconque des revendications 1 à 3, comprenant en outre :
un troisième mécanisme de positionnement (80) monté sur le premier coulisseau (21) du premier mécanisme de positionnement (20) et s'étendant selon une troisième direction (D3) ; le troisième mécanisme de positionnement (80) ayant :
un troisième coulisseau (81) mobile selon la troisième direction (D3), le deuxième mécanisme de positionnement (30) étant monté sur le troisième coulisseau (81) ;
un troisième actionneur (82) commandant une position du troisième coulisseau (81) selon la troisième direction (D3).

5. - Procédé de connexion de pointe de pipette (B) en utilisant le dispositif de connexion de pointe de pipette (B) selon la revendication 1, **caractérisé par le fait que** le procédé de connexion de pointe de pipette (B) comprend les étapes suivantes :
(a) préparation pour remplacement de pointe : fixer la pipette (A) au siège de fixation de pipette (50) ; le premier actionneur (22) commandant une position du siège de fixation de pipette (50) selon la première direction (D1) ; le deuxième actionneur (32) commandant un mouvement vers le haut et vers le bas du siège de fixation de pipette (50) ; l'actionneur d'inclinaison (60) commandant un angle du siège de fixation de pipette (50) ; préparer au moins une pointe de pipette (B) ; l'au moins une pointe de pipette (B) s'étendant vers le haut et vers le bas ; chacune de l'au moins une pointe de pipette (B) ayant une ouverture de montage formée sur une partie supérieure de celle-ci ;
(b) introduction inclinée : l'actionneur d'inclinaison (60) inclinant la pipette (A) de telle sorte qu'une ligne centrale (L2) de chacun de l'au moins un connecteur de pointe (A1) est inclinée par rapport à une ligne centrale (L3) de chacun de l'au moins une pointe de pipette (B) ; le premier actionneur (22) alignant une extrémité distale de chacun de l'au moins un connecteur de pointe (A1) sur l'ouverture de montage de l'une respective de l'au moins une pointe de pipette (B), puis le deuxième actionneur (32) déplaçant la pipette (A) vers le bas de telle sorte que l'extrémité distale de chacun de l'au moins un connecteur de pointe (A1) est partiellement introduite dans celle respective de l'au moins une pointe de pipette (B) par l'intermédiaire de l'ouverture de montage ;
(c) appui redressé : l'actionneur d'inclinaison (60), le premier actionneur (22) et le deuxième actionneur (32) commandant la pipette (A) de telle sorte que la pipette (A) est tournée avec l'au moins un connecteur de pointe (A1) comme centre de rotation pour aligner la ligne centrale (L2) de chacun de l'au moins un connecteur de pointe (A1) avec la ligne centrale (L3) de celle respective de l'au moins une pointe de pipette (B) et pour introduire complètement l'extrémité distale de l'au moins un connecteur de pointe (A1) dans la pointe de pipette (B) ; ensuite, le deuxième actionneur (32) appuyant sur la pipette (A) de telle sorte que chacun de l'au moins un connecteur de pointe (A1) est fermement monté dans celle respective de l'au moins une pointe de pipette (B).
